# DEMANDE DE BREVET EUROPEEN

(11) **EP 0 801 457 A1**
(43) Date de publication de la demande: **15.10.1997**
(21) Numéro de dépôt: 97400533.2
(22) Date de dépôt: 11.03.1997
(51) Int. Cl.: H02K 11/00, F02N 11/10

(54) **Dispositif de protection pour moteur électrique, procédé correspondant et dispositif d'entraînement à moteur électrique comportant un tel dispositif de protection**

(30) Priorité: 14.03.1996 FR 9603227
(71) Demandeur: Réalisations et Diffusion pour l'Industrie (R.D.I), 93421 Villepinte Cedex (FR)
(72) Inventeur: Dorschky, Jürgen, 77720 Saint Mery (FR); Millet, Christian, 77230 Rouvres (FR)
(74) Mandataire: Rinuy, Santarelli

(57) **Abrégé**

Le dispositif de protection est adapté à être placé dans le circuit d'alimentation du moteur, comporte au moins une bobine d'anti-parasitage du moteur et un commutateur thermique (10) couplé thermiquement à la bobine (20, 30) et apte à ouvrir le circuit lorsque la température de bobine qu'il détecte atteint une valeur prédéterminée, représentative d'un seuil maximal de température autorisé au sein du moteur.

Avantageusement, le dispositif comporte en outre un élément électrique chauffant, couplé thermiquement au commutateur et apte à constituer un trajet principal de courant entre les deux bornes d'entrée d'un quadripôle constitué par le dispositif de protection, lorsque le circuit d'alimentation est ouvert et à maintenir ouvert ce circuit pour limiter les cycles d'ouverture-fermeture du commutateur.

L'invention concerne également le procédé correspondant et un dispositif d'entraînement comportant un moteur et un tel dispositif de protection, monté sur le moteur, à l'extérieur de celui-ci.

## Description

La présente invention concerne, d'une manière générale, la protection contre les parasites électromagnétiques émis par les moteurs électriques et la protection thermique de ces derniers.

Pour des raisons d'encombrement, de masse et de coût, les fabricants sont de plus en plus amenés à réduire les dimensions des moteurs électriques.

Ceci implique la nécessité de protéger le moteur électrique contre tout échauffement excessif qui lui serait fatal (endommagement des balais, décollement des lames du collecteur, court-circuit de l'induit ...).

Afin notamment de ne pas être à nouveau confrontés aux problèmes d'encombrement mentionnés supra, les fabricants se sont donc peu à peu tournés vers l'étude de protections thermiques disposées à l'extérieur des moteurs. Cela peut aussi leur éviter d'ailleurs d'avoir à personnaliser les moteurs suivant les différents cahiers des charges présentés par les clients, en cours de montage, et donc d'avoir à gérer un stock important de différentes références en ligne de production.

Un exemple de protection thermique externe est donné dans le document de brevet GB-A-2.668.661, dans une application à un démarreur de moteur à combustion interne. Ramené à l'essentiel, un commutateur thermique est couplé thermiquement au sabot d'un câble d'alimentation du démarreur électrique, sabot qui est dimensionné de telle sorte que la chaleur qui y est produite soit proportionnelle à la température interne du démarreur. Le commutateur thermique est apte à couper l'alimentation du démarreur lorsque la température du sabot de câble dépasse une température de consigne correspondant à une température maximale autorisée au sein du démarreur.

Pour les mêmes raisons d'encombrement notamment, les fabricants se sont aussi tournés vers des dispositifs d'anti-parasitages des moteurs électriques disposés à l'extérieur de ces derniers. On utilise notamment à cet effet des condensateurs et/ou des bobines d'anti-parasitage destinés à filtrer les fréquences parasites. Dans une forme de réalisation largement répandue, la bobine d'anti-parasitage est constituée par un solénoïde à bobinage enroulé sur un noyau de ferrite cylindrique.

L'ensemble des dispositifs de protection mentionnés ci-dessus donnent généralement satisfaction. Il serait toutefois souhaitable de pouvoir réaliser la protection contre les parasites électromagnétiques et la protection thermique d'une manière plus simple et à l'aide de moyens plus compacts.

C'est pourquoi la présente invention propose, d'une manière générale, un procédé de protection, consistant à réaliser l'anti-parasitage d'un moteur électrique à l'extérieur de celui-ci au moyen d'au moins une bobine d'anti-parasitage, caractérisé en ce qu'il consiste en outre à :
- détecter la température de la ou des bobines d'anti-parasitage; et
- ouvrir le circuit d'alimentation électrique du moteur lorsque la température détectée atteint une valeur prédéterminée représentative d'un seuil maximum de température autorisé au sein du moteur électrique.

Grâce à un tel procédé, on apporte une réponse aux besoins qui viennent d'être mentionnés, car on réalise la protection contre les parasites électromagnétiques et la protection thermique grâce à des moyens communs.

En effet, les inventeurs se sont aperçu que les bobines d'anti-parasitage de moteurs électriques sont capables de reproduire les variations de température générées au sein d'un moteur électrique auquel elles sont raccordées et à l'extérieur duquel elles sont disposées.

Un dispositif de protection correspondant, adapté à être placé dans le circuit d'alimentation du moteur, comportant au moins une bobine d'anti-parasitage du moteur et caractérisé en ce qu'il qu'il comporte en outre un commutateur thermique couplé thermiquement à la bobine et apte à ouvrir le circuit d'alimentation lorsque la température de bobine qu'il détecte atteint une valeur prédéterminée, représentative d'un seuil maximal de température autorisé au sein du moteur électrique, s'avère particulièrement compact.

D'autre part, il n'est plus nécessaire de personnaliser le moteur électrique lui-même, mais simplement de raccorder à celui-ci un dispositif de protection répondant à un cahier des charges spécifique du client.

Dans un mode de réalisation préféré, le dispositif de protection constitue un quadripôle.

Avantageusement, dans ce mode de réalisation préféré, la bobine et le commutateur thermique sont disposés en série entre une première entrée et une première sortie du quadripôle et le dispositif de protection comporte en outre une seconde bobine d'anti-parasitage couplée thermiquement au commutateur thermique et disposée entre la seconde entrée et la seconde sortie du quadripôle.

La mise en oeuvre de deux bobines d'anti-parasitage permet de réaliser un dispositif encore plus compact et efficace en termes d'anti-parasitage, tout en garantissant un contact thermique intime entre la partie anti-parasitage et le commutateur thermique.

Afin d'améliorer encore l'anti-parasitage, le dispositif de protection comporte en outre un élément d'anti-parasitage additionnel disposé entre les deux bornes de sortie du quadripôle.

En sorte de filtrer des fréquences plus basses que celles filtrées par les bobines d'anti-parasitage, l'élément additionnel est avantageusement constitué par un condensateur ou une varistance.

Suivant un aspect particulièrement intéressant de la présente invention, le dispositif de protection peut comporter en outre un élément électrique chauffant, tel qu'une résistance, couplé thermiquement au commutateur thermique et apte à constituer un trajet principal de courant entre les deux bornes d'entrée du quadripôle, lorsque le circuit d'alimentation du moteur est ouvert et à maintenir ouvert le circuit d'alimentation par chauffage du commutateur thermique.

Grâce à ces dispositions, on limite le nombre de cycles d'ouverture et de fermeture du circuit d'alimentation par le commutateur thermique tant que l'alimentation est maintenue aux bornes d'entrée du quadripôle et, par voie de conséquence, l'usure du commutateur thermique.

D'une manière similaire, dans le cadre du procédé décrit supra, avantageusement, on maintient ouvert le circuit d'alimentation électrique du moteur tant qu'un courant électrique est appliqué à ce circuit.

Le dispositif de protection peut en outre comporter des pattes métalliques de raccordement au circuit d'alimentation électrique et par exemple des pattes de raccordement adaptées à être raccordées d'une part, à une source d'alimentation et, d'autre part, aux bornes d'alimentation d'un moteur électrique.

Suivant un autre aspect, la présente invention propose un dispositif d'entraînement à moteur électrique, caractérisé en ce qu'il comporte un moteur électrique et un dispositif de protection, tel que défini ci-dessus, monté sur ce moteur électrique, à l'extérieur de celui-ci.

Le dispositif de protection pourra être raccordé soit aux bornes d'alimentation du moteur électrique, soit aux balais de ce même moteur.

D'autres caractéristiques et avantages de la présente invention ressortiront de la description suivante, faite au regard du dessin annexé sur lequel :
- la figure 1 est une vue schématique d'un dispositif de protection conforme à la présente invention ;
- la figure 2 représente un circuit électrique dans lequel est placé le dispositif de la figure 1 ; et
- la figure 3 représente un circuit électrique dans lequel est placé un dispositif de protection conforme à un mode de réalisation préféré de la présente invention.

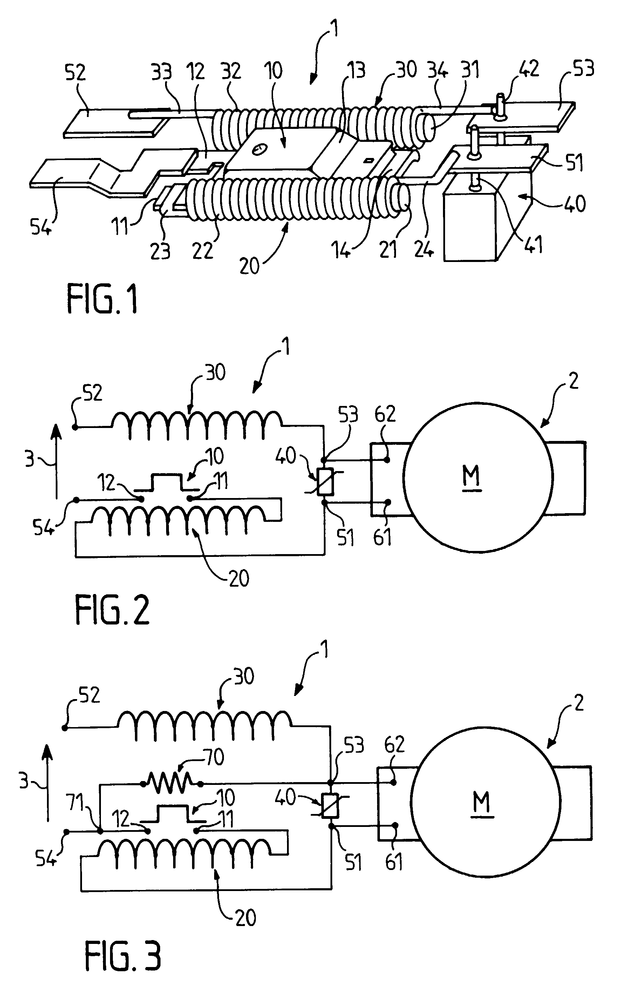

Sur la figure 1 est représenté un premier mode de réalisation du dispositif de protection conforme à la présente invention.

Ce dispositif de protection 1 est ici constitué, d'une manière générale, d'un commutateur thermique 10, de deux bobines d'anti-parasitage 20, 30 et d'une varistance 40.

Plus précisément, les bobines d'anti-parasitage comportent chacune un noyau de ferrite 30, 31 sur lequel est bobiné un fil de cuivre émaillé 22, 32.

Les extrémités libres 23, 24 du fil de cuivre émaillé 22 constituant un solénoïde sont respectivement soudées sur une borne 11 du commutateur thermique 10 et sur une patte métallique de raccordement 51. Les extrémités libres 33, 34 du fil de cuivre émaillé 32 constituant le solénoïde de l'autre bobine d'anti-parasitage 30 sont chacune, également, soudées sur une patte métallique de raccordement 52, 53.

Les pattes 51, 53 sont chacune traversées par une broche de la varistance 40. Ces broches 41, 42 constituent les deux bornes de la varistance 40 et sont soudées sur les pattes de raccordement 51, 53.

On notera ici que dans d'autres modes de réalisation, les fixations par soudage mentionnées supra peuvent être remplacées par un sertissage ou toute autre fixation équivalente.

Une quatrième patte métallique de raccordement 54 est, par ailleurs, soudée à la seconde borne 12 du commutateur thermique. On observera ici d'ailleurs que les deux bornes 11, 12 du commutateur thermique 10 se présentent également sous la forme de pattes métalliques.

Le commutateur thermique 10 comporte un boîtier métallique 13 fixé sur une embase en inox 14 présentant des faces de détection thermique.

Les deux bobines d'anti-parasitage 20, 30 sont collées sur ces faces de détection thermique du boîtier, parallèlement l'une à l'autre. Plus précisément, les bobines 20, 30 sont collées dans l'angle formé par les faces de détection dressées perpendiculairement à l'embase 14 et l'embase 14 elle-même.

Le collage évite toute détérioration de l'émaillage des fils 22, 32 du fait d'éventuelles vibrations, détérioration qui pourrait entraîner un court-circuit ou une altération des performances du dispositif de protection 1.

Les pattes 51 et 53 soudées aux broches 41, 42 de la varistance 40 sont, elles, aussi parallèles l'une à l'autre, de même que les deux autres pattes de raccordement 52 et 54.

Les bobines d'anti-parasitage sont des bobines classiques et droites assurant un couplage thermique optimal avec le commutateur thermique 10.

En effet, le commutateur thermique 10 comporte ici un capteur bimétallique au sein du boîtier métallique 13. Lorsqu'une température de consigne, détectée par les faces de détection du commutateur 10 au contact des sources chaudes que constituent les bobines 20, 30, dans les conditions détaillées ci-après, est atteinte, les contacts du capteur bimétallique se séparent et interrompent la circulation de courant entre les bornes 11 et 12.

L'ensemble du dispositif de protection 1 est enfermé dans un boîtier en matière plastique (non représenté) rendu étanche au niveau des plans de joint par le biais d'une soudure par ultrasons ou au moyen d'un joint d'étanchéité.

Les pattes de raccordement repérées 51 à 54 débouchent de ce boîtier en matière plastique.

Ce dernier boîtier pourra être pourvu d'un marquage indiquant les caractéristiques du dispositif de protection 1.

On va maintenant décrire, à l'appui de la figure 2, le fonctionnement de ce dispositif de protection.

Cette figure 2 représente, sous forme de schéma électrique, le dispositif de protection 1, placé dans un circuit d'alimentation d'un moteur électrique 2.

La source d'alimentation est représentée par la flèche 3 et peut être constituée, par exemple, par une batterie.

La source d'alimentation est raccordée aux deux bornes d'entrée du quadripôle constitué ici par le dispositif de protection 1 et représentées en pratique par les pattes de raccordement 52 et 54. Ce raccordement pourra se faire, soit par une liaison directe des pattes de raccordement 52, 54 aux bornes de la source d'alimentation 3, soit par l'intermédiaire de liaisons filaires, par exemple à l'aide de conducteurs souples.

Les bornes de sortie du quadripôle constituées par le dispositif de protection 1 et représentées, en pratique, par les pattes de raccordement 51, 53, sont chacune reliées à une borne 61, 62 du moteur électrique 2. Le raccordement pourra se faire, soit par une liaison directe des pattes 51, 53 aux bornes 61, 62, ou par l'intermédiaire de liaisons filaires, par exemple des conducteurs souples.

Dans d'autres modes de réalisation, les raccordements du dispositif de protection 1, d'une part, à la source d'alimentation 3 et, d'autre part, au moteur électrique 2, pourront également être réalisés en donnant aux pattes 51, 54 une configuration de raccordement spécifique.

Les pattes de raccordement 51 à 54 pourront aussi être remplacées par des moyens de raccordement équivalents, connus de l'homme du métier et l'on pourra aussi prévoir un raccordement aux bornes des balais du moteur 2 par l'intermédiaire de conducteurs souples, au lieu d'un raccordement à des bornes d'entrée et de sortie 61, 62.

Comme on le voit mieux sur la figure 2, entre une première borne d'entrée 52 et une première borne de sortie 53 du quadripôle est disposée l'une des bobines d'anti-parasitage 30, tandis qu'entre la seconde borne d'entrée 54 et la seconde borne de sortie 51 du quadripôle sont disposés en série le commutateur thermique 10 et l'autre bobine d'anti-parasitage 20.

En outre, la varistance 40, qui peut être assimilée à deux diodes Zener connectées en anti-série, est disposée entre les deux bornes de sortie du quadripôle, et est ainsi située le plus près possible du moteur, pour assurer le meilleur anti-parasitage possible.

Ainsi, lorsqu'un courant électrique est appliqué aux bornes d'entrée 52 et 54 du quadripôle constitué par le dispositif de protection 1, ce dernier réalise, d'une part, l'anti-parasitage du moteur électrique 2. Plus précisément, les bobines d'anti-parasitage 20, 30 filtrent les parasites électromagnétiques liées aux hautes fréquences générées par le moteur électrique 2, tandis que la varistance filtre les parasites électromagnétiques liées aux basses fréquences générées par le moteur électrique 2. En d'autres termes, le dispositif de protection 1 protège le réseau électrique dans lequel est monté le dispositif de protection 1, le moteur 2 et la source d'alimentation 3 de ces parasites électromagnétiques émis par le moteur électrique 2.

D'autre part, le dispositif de protection 1 effectue également la protection thermique du moteur électrique 2.

En effet, les inventeurs se sont aperçus que les bobines d'anti-parasitage, parcourues par le même courant que le moteur électrique sont capables de constituer des équivalences ou images thermiques de ce même moteur, à l'extérieur de celui-ci.

En d'autres termes, les bobines d'anti-parasitage 20, 30 reproduisent les variations de température apparaissant au sein du moteur électrique 2 et les transmettent avec un minimum d'inertie thermique au commutateur thermique 10 assemblé intimement avec elles.

Ainsi, si du fait d'une surcharge ou d'un blocage du moteur électrique 2, un échauffement anormal se produit à l'intérieur de ce dernier, l'on atteint la température prédéterminée ou de consigne assignée au commutateur thermique 10 et les contacts de son capteur bimétallique se séparent et ouvrent le circuit d'alimentation du moteur électrique 2, arrêtant ce dernier.

On entend ici par blocage, par exemple un blocage en rotation du rotor du moteur électrique 2 tandis que ce moteur est toujours alimenté en électricité. Un tel blocage peut être dû à une anomalie quelconque, telle que par exemple un blocage d'une vitre par le givre entraînant un blocage du rotor d'un moteur de lève-vitre en rotation.

Le moteur électrique 2 n'est à nouveau alimenté que lorsqu'aucune surcharge ou aucun blocage n'est plus appliqué à celui-ci, permettant à la température des bobines d'anti-parasitage 20, 30 de passer en -dessous d'une température de réenclenchement permettant aux contacts du capteur bimétallique de revenir au contact l'un de l'autre et de fermer le circuit d'alimentation du moteur électrique 2.

Outre les avantages déjà mentionnés ci-dessus, le dispositif de protection 1 de la présente invention permet, grâce à l'encapsulage dans le boîtier de rallonger les cycles d'ouverture-fermeture du commutateur et, par voie de conséquence, de diminuer la température stabilisée moyenne du moteur électrique.

De plus, il sera possible de mettre en oeuvre un fonctionnement à basse température du moteur électrique.

En pratique, dans une application particulière du circuit électrique de la figure 2, le dispositif de protection 1 et le moteur électrique 2 présentent les caractéristiques suivantes :
1. Moteur 2 de lève vitre automobile :
   - alimentation : 12 Volts continu
   - courant nominal : 3 A
   - bobinage : 19 spires de 0,45 mm de section
   - 35 tôles de rotor
2. Dispositif de protection 1 :
   - varistance 40 : varistance commercialisée par la Société Siemens sous la référence SHCV-SRIK20M105Z et ayant 1 µ F.
   - bobines d'anti-parasitage 20, 30 :
   - 19 spires de fil émaillé de diamètre 0,9 mm
   - 4,2 µ H
   - commutateur thermique 10 : Type VP 3C001 commercialisé par la Société Control Devices lnc.
   - bimétal ayant une résistivité de 70 Ω/CMF
   - température de consigne ou déclenchement: 132 à 155°C
   - température de réenclenchement : environ 85°C
   - temps de déclenchement sous 20 A: 11 à 23 s.

Dans un mode de réalisation préféré montré sur la figure 3, le dispositif de protection 1 comporte en outre un élément électrique chauffant 70, ici une résistance, également couplé thermiquement au commutateur thermique 10.

L'une de ses bornes est branchée sur la liaison entre la source d'alimentation 3 et la borne 12 du commutateur 10, c'est-à-dire en pratique sur la patte 54. L'autre de ses bornes est branchée sur la liaison entre la bobine 30 et la varistance 40, c'est-à-dire en pratique sur la patte 53.

Cette résistance 70 est choisie de telle sorte à constituer un trajet principal de courant entre les bornes d'entrée 52, 54 du quadripôle lorsque le circuit d'alimentation du moteur électrique 2 est ouvert et à maintenir ouvert ce circuit, par l'intermédiaire d'un chauffage du commutateur thermique 10, tant qu'un courant électrique reste appliqué aux bornes d'entrée 52, 54 du quadripôle. On évite ainsi que le commutateur thermique 10 n'opère de nombreux et inutiles cycles d'ouverture-fermeture lorsqu'un courant électrique est appliqué aux bornes 52, 54 et que le moteur électrique 2 est soumis à une surcharge ou un blocage.

Le moteur électrique 2 n'est ainsi à nouveau alimenté que lorsque la température redescend à la température de consigne de réenclenchement.

L'élément chauffant 70 est également collé sur le boîtier métallique 13. La résistance sera bien sûr choisie de manière à ne pas constituer en continu un trajet principal de courant entre les deux bornes d'entrée du quadripôle.

Dans d'autres modes de réalisation, le commutateur thermique 10 pourra, au lieu du capteur bimétallique, comporter un thermocouple, une sonde à coefficient de température négatif (CTN) ou positif (CTP), un thermostat ou encore être constitué par un commutateur thermique à base de polymères, dont la résistance augmente très rapidement avec la température.

Dans ce cas, on entendra par ouverture du circuit une résistance très élevée sur ce circuit, empêchant le passage du courant.

La varistance pourra également être remplacée par un condensateur.

D'autre part, le dispositif de protection 1 pourra être inséré dans un réseau électrique, entre une source d'alimentation et un moteur électrique, comportant divers autres éléments, outre ceux montrés sur les figures 2 et 3.

On pourra également prévoir un anti-parasitage de plusieurs vitesses du moteur par une connexion appropriée d'éléments d'anti-parasitage aux bornes correspondantes du moteur électrique.

On placera bien sûr les moyens d'anti-parasitage le plus près possible de la source principale des parasites, c'est-à-dire le contact entre les balais et le collecteur du moteur électrique.

D'autres schémas électriques équivalents à ceux présentés en référence aux figures 2 et 3 peuvent bien sûr être envisagés. On pourra, par exemple, simplement disposer en série un commutateur thermique et une bobine d'anti-parasitage couplés thermiquement l'un à l'autre, une borne du commutateur étant reliée à une source d'alimentation dont la seconde borne est reliée à la masse, tandis que la seconde borne de la bobine d'anti-parasitage est reliée à une borne d'un moteur dont la seconde borne est également reliée à la masse.

On pourra également prévoir un montage avec une bobine d'anti-parasitage en parallèle sur les deux bornes du moteur électrique ou encore un quadripôle avec un commutateur thermique entre une borne d'entrée et une borne de sortie du quadripôle et une bobine d'anti-parasitage entre les deux autres bornes, la bobine et le commutateur étant couplés thermiquement l'un à l'autre.

D'une manière générale, le capteur bimétallique sera choisi selon le cahier des charges imposé pour la protection thermique du moteur, en particulier en ce qui concerne la valeur ohmique du bimétal, la résistivité du boîtier métallique et la température de basculement. Il en va de même des bobines d'anti-parasitage, notamment pour que ce qui est du diamètre du fil qui sera déterminé en sorte d'obtenir un effet thermique optimal et la matière du fil (cuivre, alliage de cuivre ou autre matière présentant la résistivité appropriée).

A cet égard, le boîtier métallique sera choisi en un métal permettant le meilleur échange thermique possible.

Enfin, l'homme du métier saura également mettre en oeuvre un circuit électronique en lieu et place de la résistance 70 pour maintenir ouvert le circuit d'alimentation électrique du moteur tant qu'un courant électrique est appliqué à ce circuit.

Plus généralement, on rappelle que l'invention ne se limite pas aux exemples décrits et représentés.

## Revendications

1. Procédé de protection, consistant à réaliser l'anti-parasitage d'un moteur électrique à l'extérieur de celui-ci au moyen d'au moins une bobine d'anti-parasitage, caractérisé en ce qu'il consiste en outre à :
- détecter la température de la ou des bobines d'anti-parasitage; et
- ouvrir le circuit d'alimentation électrique du moteur lorsque la température détectée atteint une valeur prédéterminée représentative d'un seuil maximum de température autorisé au sein du moteur électrique.

2. Procédé selon la revendication 1, caractérisé en ce qu'il consiste à maintenir ouvert le circuit d'alimentation tant qu'un courant électrique est appliqué à ce circuit.

3. Dispositif de protection pour moteur électrique, adapté à être placé dans le circuit d'alimentation du moteur et comportant au moins une bobine d'anti-parasitage de ce moteur, caractérisé en ce qu'il comporte en outre un commutateur thermique (10) couplé thermiquement à la bobine (20, 30) et apte à ouvrir le circuit d'alimentation lorsque la température de bobine qu'il détecte atteint une valeur prédéterminée, représentative d'un seuil maximal de température autorisé au sein du moteur électrique (2).

4. Dispositif de protection selon la revendication 3, caractérisé en ce qu'il constitue un quadripôle (1).

5. Dispositif de protection selon la revendication 4, caractérisé en ce que la bobine (20) et le commutateur thermique (10) sont disposés en série entre une première entrée (54) et une première sortie (51) du quadripôle et en ce que le dispositif comporte en outre une seconde bobine d'anti-parasitage (30) disposée entre la seconde entrée (52) et la seconde sortie (53) du quadripôle et couplée thermiquement au commutateur thermique (10).

6. Dispositif de protection selon la revendication 5, caractérisé en ce qu'il comporte en outre un élément d'anti-parasitage additionnel (40) disposé entre les deux bornes de sortie du quadripôle.

7. Dispositif de protection selon l'une quelconque des revendications 4 à 6, caractérisé en ce qu'il comporte en outre un élément électrique chauffant, tel qu'une résistance, couplé thermiquement au commutateur thermique et apte à constituer un trajet principal de courant entre les deux bornes d'entrée du quadripôle, lorsque le circuit d'alimentation du moteur est ouvert et à maintenir ouvert le circuit d'alimentation par chauffage du commutateur thermique.

8. Dispositif de protection selon l'une quelconque des revendications 3 à 7, caractérisé en ce qu'il est monté dans un boîtier étanche.

9. Dispositif de protection selon l'une quelconque des revendications 3 à 8, caractérisé en ce que chaque dite bobine d'anti-parasitage comporte un noyau de ferrite sur lequel est bobiné un fil de cuivre émaillé.

10. Dispositif de protection selon l'une quelconque des revendications 3 à 9, caractérisé en ce que le commutateur thermique (10) comporte un capteur bimétallique enfermé dans un boîtier métallique (13) présentant des faces de détection thermique.

11. Dispositif de protection selon la revendication 10, caractérisé en ce que chaque dite bobine d'anti-parasitage est collée sur le boîtier métallique (13).

12. Dispositif de protection selon l'une quelconque des revendications 3 à 9, caractérisé en ce que le commutateur thermique (10) comporte un thermocouple, une sonde à coefficient de température négatif (CTN) ou positif (CTP), ou un thermostat.

13. Dispositif de protection selon l'une quelconque des revendications 3 à 9, caractérisé en ce que le commutateur thermique est un commutateur à base de polymères.

14. Dispositif de protection selon l'une quelconque des revendications 3 à 13, caractérisé en ce qu'il comporte en outre des pattes métalliques (51-54) de raccordement au circuit d'alimentation électrique.

15. Dispositif de protection selon l'une quelconque des revendications 6 à 14, caractérisé en ce que l'élément d'anti-parasitage additionnel (40) est un condensateur ou une varistance.

16. Dispositif d'entraînement à moteur électrique, caractérisé en ce qu'il comporte un moteur électrique et un dispositif de protection selon l'une quelconque des revendications 3 à 15, monté sur le moteur électrique (1), à l'extérieur de celui-ci.

17. Dispositif selon la revendication 16, caractérisé en ce que le dispositif de protection est raccordé aux bornes d'alimentation (61, 62) du moteur électrique.

18. Dispositif selon la revendication 16, caractérisé en ce que le dispositif de protection est raccordé aux balais du moteur électrique.
